**Europäisches Patentamt**

**European Patent Office**

**Office européen des brevets**

(11) Publication number: **0 068 367**
**B1**

# (12) EUROPEAN PATENT SPECIFICATION

(45) Date of publication of patent specification: **17.09.86**

(21) Application number: **82105384.0**

(22) Date of filing: **18.06.82**

(51) Int. Cl.⁴: **B 60 J 1/17, B 60 R 13/06**

(54) **Sealing structure for a movable window.**

(30) Priority: **26.06.81 JP 100093/81**

(43) Date of publication of application:
**05.01.83 Bulletin 83/01**

(45) Publication of the grant of the patent:
**17.09.86 Bulletin 86/38**

(84) Designated Contracting States:
**DE FR GB**

(56) References cited:
**EP-A-0 040 588**
**DE-A-2 808 235**
**DE-A-2 826 949**
**DE-A-2 827 372**
**DE-A-2 847 404**
**DE-B-2 809 721**
**DE-C- 701 412**
**GB-A-2 078 839**

(73) Proprietor: **NISSAN MOTOR CO., LTD.**
**No.2, Takara-cho, Kanagawa-ku**
**Yokohama-shi Kanagawa-ken 221 (JP)**

(72) Inventor: **Koike, Shoichi**
**Nissan Motor Company, Limited**
**Ogikubo Plant, 5-1**
**Momoi 3-chome Suginami-ku Tokyo (JP)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

Courier Press, Leamington Spa, England.

## Description

The invention pertains to a sealing structure for a vertically movable window glazing in an automotive vehicle in which a window frame includes two parallel, front and rear legs and a top leg, said glazing having two parallel edges substantially matching the separation of the parallel, front and rear legs, and a top edge, the sealing structure comprising a seal mounted in a U-shaped structure of the window frame and having formed a separation therein and a pad extending outwards and cushioning the edge of the glazing, and a guide means being a part of the edges of the glazing, extending in a plane parallel to the glazing and running in the separation of the seal.

A common feature of the doors of automotive vehicle is a window which can be raised and lowered at will. The windowpane follows a track defined by vertical legs of a window frame within the door frame, and the top edge of the pane can engage the top horizontal leg of the sill. The sill is normally lined with an elastic material which simultaneously protects the glazing from damage due to vibration, seals the edges of the window and facilitates the sliding movement of the windowpane.

In the most common type of movable window, however, the edges of the windowpane are centered in the side and top elastic sealing liners so that the outer surface of the pane is offset noticeably from the plane of the window sill. Not only does this detract from the overall appearance of the window, it also disrupts the laminar flow of air around the vehicle body, resulting in unnecessary aerodynamic drag and unpleasant noise.

In the DE—A1—2847404, there is disclosed a movable window for a automotive vehicle as defined in the pre-characterizing part of claim 1. This movable window includes a window pane whose outer edges matches the separation of a sealing structure which is mounted in a U-shaped structure of the window frame. The edges of the window glazing extend in a plane parallel to the respective part of the window glazing. These outer edges thereby serve as a guide means, which is running in the separation of the window frame seal. Furthermore, these outer edges which are integral with the window glazing extend around the whole periphery of said window glazing. This results in the disadvantage that if the window pane of said automotive vehicle is opened marginally, the driver and the passengers inside the vehicle cannot see outwards from inside the vehicle without disturbance caused by said outer edges of said window glazing. Furthermore, the manufacturing costs of such a window glazing are relatively high and it is very difficult to provide sufficient manufacturing tolerances which are necessary for a sufficient guiding and sealing of said window glazing.

In the DE—A1—2808235, a movable window is also disclosed for a motor vehicle. This movable window includes a window pane whose outer edges contact a sealing member. The outer edges of the window pane are in the same plane as the main part of the window pane. The sealing process itself is only achieved by said edges of the window pane. Along the two edges of said window pane, which are extending in a upright position, two separate guidings are provided, respectively, which run in a separate groove of the window frame. Two of these guidings are connected to the window pane at the lower portion of the side edges, the two other guidings are located at the upper portions of said window pane. The object of these guidings is to move the window pane during the opening procedure of the window to the inside of the vehicle and to press the window pane against the sealing member in the closed position of the window pane. Thereby, the guidings are not a part of the sealing member and are not co-working with the sealing member. They only serve to move the window pane in a sideward direction, actuated by the groove in which they are running. Therefore, such a type of movable window results in the disadvantage that the window pane is only guided at four points, two points on each upward edge of the window glazing. Therefore, the forces which are acting on said guidings are extremely strong and, therefore, would cause the danger of damage to the guidings or to the grooves in which they are running. Furthermore, in a position in which the window glazing is only marginally opened, the guidings have moved the window pane to the inside of the vehicle and, therefore, the sealing member is out of contact with the window glazing. This results in the disadvantage that in the lower portions of the movable window a stream of air or water from the outside of the vehicle could enter the U-shaped portion of the sealing members. When the vehicle is driven at a high speed, the possibility of deformation of the window glazing caused by the air pressure actuating on the window glazing is relatively high. In such a case the entrance of water or air from the outside of the vehicle cannot be prevented.

In the DE—A1—2827372, a movable window for a motor vehicle is disclosed which is very similar to the movable window of the DE—A1—2808235. Furthermore, in said movable window four guidings are mounted on the upright edges of the window glazing, two at the front edge and two at the rear edge. Furthermore, in this application the guidings are running in a cam track and are moving in connection with said cam track, the window glazing in a direction perpendicular to the plane of the window pane. Therefore, such a type of movable window incorporates the same disadvantages as the window pane of the DE—A1—2808235.

The technical problem underlying the invention is to provide a guide structure for moving a window glazing for an automotive vehicle upwards or downwards which permits the window glazing to lie flush with the window sill without generating unnecessary noise or detracting from the aerodynamic properties and with good overall appearance such as a smooth surface.

According to the invention the technical problem is solved in that the guide means is in the form of a rigid, separate guide, being adhered to each of the parallel edges of the inward surface of the glazing, the guide means extending only along the parallel edges of the glazing, and in that a vibration damper means is disposed at a point along the top leg for receiving a small portion of the respective edge of the glazing.

The invention provides a sealing structure for a movable window which includes guide means fixed to the windowpane, projecting beyond the edges thereof parallel to the direction in which the pane is moved and having a runner offset toward the longitudinal axis of vehicle from the pane. The guide runner engages elastic sealing means which allows the guide to slide easily and quietly therealong whereby the pane is held flush with the outer surface of the vehicle. The sealing structure can as a further development include vibration damper means fixed to the window sill to guide the pane into place when the windowpane closes while damping the vibration thereof.

The inventive sealing structure for a movable window glazing follows the principle of providing a rigid, separate guide which is adhered to each of the parallel edges of the inward surface of the pane. This results in the advantage that the window glazing itself has a simple structure and can be manufactured in the usual way and with low costs. The separate guide extends along the whole length of the parallel edges and therefore provides under all circumstances a tight sealing of the movable window glazing. Furthermore, the separate guide is only adhered to those edges of the window glazing, which are always in contact with the U-shaped sealing structure under all opening and closing positions of the window glazing. Therefore, if the window glazing is only opened marginally the driver or the passengers inside the vehicle can see quite well outwards from the inside without any disturbance by a guiding or sealing means. The vibration damper means can be disposed at a point of the top leg for receiving a specific portion of the respective particular edge of the glazing. This vibration damper means which is only provided in a very small area of the window sill frame ensures that the window glazing does not move out of its position under high speeds of the motor vehicle. By the provision of said vibration damper means the window glazing is absolutely fixed in its closed position without the necessary providing of the further guide means which then had to be also a part of the window glazing with all the disadvantages discussed in the description of the state of the art.

Like reference numerals denote similar elements throughout the drawings, which should not be taken as limitative of the invention but are for the purposes of exemplary illustration only.

Fig. 1 is an elevation view of a portion of a vehicle door.

Fig. 2. is a cross-sectional view taken along line II—II in Fig. 1.

Fig. 3 is a cross-sectional view taken along line III—III in Fig. 1.

Fig. 4 is a cross-sectional view taken along line IV—IV in Fig. 1.

Throughout the following description, the term "inward" and the like will be used to mean "toward the longitudinal axis of the vehicle"; "outward" will imply the opposite direction.

A vehicle door 1 includes a window sill frame 2 lined with an elastic sealing member 3. The edges of a guide means 10 of a pane 4 of window glazing are received within the elastic sealing member 3. Sill frame 2 also supports door weather stripping 5 which sealingly abuts the door frame 6 of the vehicle body when door 1 is closed.

Sealing member 3 includes outward and inward lips 3a and 3b, respectively, which allow the guide means 10 to pass between them, but are biassed to intimately contact the guide means 10 when it is within seal 3. Thus, lips 3a and 3b tend to hold the guide means 10 centered within seal 3.

A rigid guide member 10, extending along the upper and front oblique edge of the pane, is fixed to the edge of the inward surface of pane 4 by means of a layer of adhesive. For the sake of appearance, a layer of tint or dye may be provided between pane 4 and adhesive. Guide 10 extends beyond the upper edge of pane 4 and curves to form a runner 10a parallel to pane 4 and offset inward therefrom by distance H. Runner 10a is received within seal 3 between lips 3a and 3b so that pane 4 now is held flush with the surface of sill frame 2.

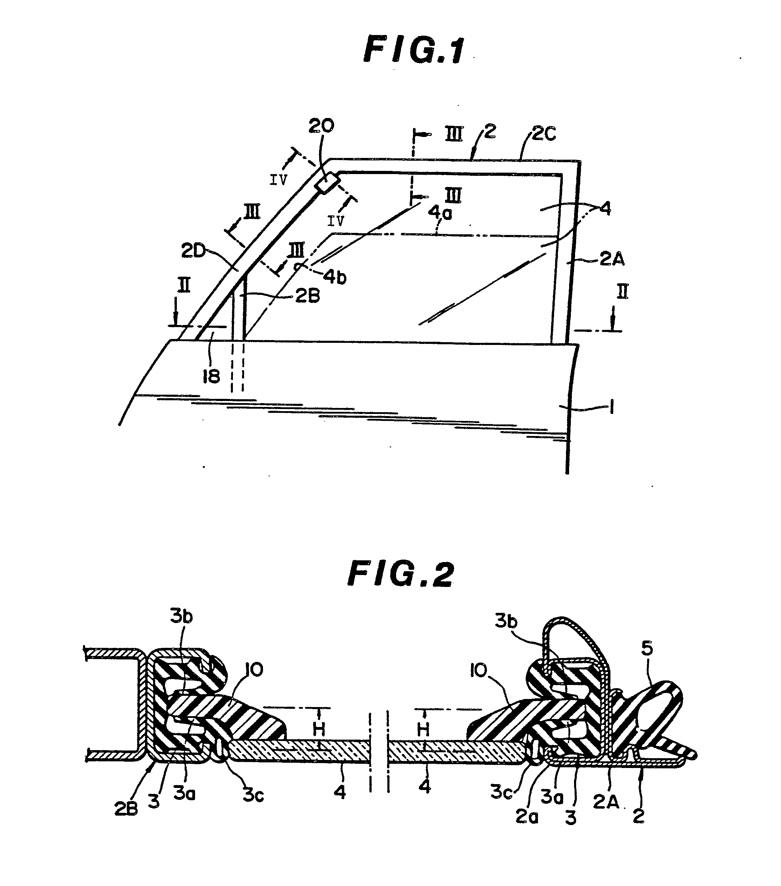

Seal 3 further comprises an additional pad 3c which acts as a buffer between the edge of pane 4 and the edge of sill frame 2. Pad 3c may be hollow to enhance its elasticity. As shown in Fig. 1, sill frame 2 consists of a rear vertical riser 2A, a front riser 2B, a top horizontal leg 2C, and a top front oblique leg 2D connecting front riser 2B to top horizontal leg 2C and being a part of the top horizontal leg 2C. Pane 4 fits with sliding tolerance between risers 2A and 2B, and the top edges 4a and 4b thereof parallel to the legs 2C and 2D, respectively. A vibration damper 20 disposed near the joint of legs 2C and 2D serves to stifle inward/outward vibrations of pane 4, as will be explained in more detail later.

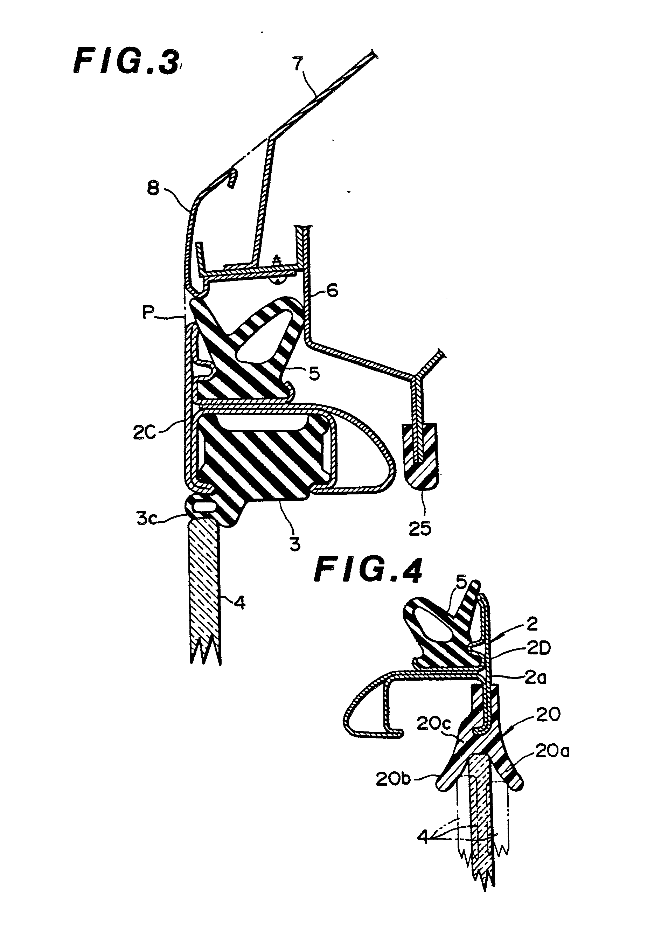

Risers 2A and 2B are equipped with sealing structures 3 such as are shown in Fig. 3. Accordingly, the vertical edges of pane 4, which will always be hidden from view, are equipped with rigid guides 10, as shown in Fig. 2. Rear riser 2A also supports door weather stripping 5 since it comprises one edge of door 1. Front riser 2B, on the other hand, is bordered by a front wing window 18 and thus does not need weather stripping.

Fig. 3 shows a modified seal 3 suitable for use along most of legs 2C and 2D. In addition, Fig. 3 shows that the upper edges 4a and 4b of pane 4 are not provided with guides. This permits the highly visible upper edges 4a and 4b to maintain a clean, uncluttered appearance. The absence of guides also obviates the need for lips in the sealing member 3, so that seal 3 can simply consist of the pad 3c between sill frame 2 and pane 4 supported by a solid elastic base.

The guides 10 along the vertical edges of a pane 4 are sufficient to securely hold pane 4 with the sill 2. However, with no guides along the upper edges, it is likely that pane 4 will vibrate annoyingly unless somehow secured at the top. This is the purpose of vibration damper 20, shown in Figgs. 1 and 4.

Vibration damper 20 is secured to sill 2 near the joint between legs 2C and 2D in place of sealing member 3. Damper 20 consists of outward and inward flaps 20a and 20b, respectively, which join to form a downward-facing crotch at a base 20c attached to the outward edge of oblique leg 2D.

As pane 4 is raised from a lowered position, such as is shown with phantom lines in Fig. 1, the top edges 4a and 4b may be slightly out of alignment with the plane of the outward surface of sill frame 2, as shown in phantom lines in Fig. 4. However, when the pane 4 comes into contact with one of the resilient flaps 20a or 20b, it will be urged into alignment, and so as it is raised to its upper limit of travel, it will come to rest at the crotch in base 20c. Here, the top edges 4a and 4b will be held in alignment with the outward surface of sill frame 2 and will be prevented from vibrating in the inward/outward direction by the force of resilient flaps 20a and 20b. Thus, pane 4 can be securely held flush to the outer surface of the door without the need for an unsightly guide along its upper edges.

## Claims

1. A sealing structure in use for a vertically movable window glazing (4) in an automotive vehicle in which a window frame (2) includes two parallel, front and rear legs (2B, 2A) and a top leg (2C), said glazing (4) having two parallel edges substantially matching the separation of the parallel, front and rear legs (2B, 2A), and a top edge (4a), the sealing structure comprising a seal (3) mounted in a U-shaped structure of the window frame (2) and having formed a separation therein and a pad (3c) extending outwards and cushioning the edge of the glazing (4), and a guide means (10) being a part of the edges of the glazing (4), extending in a plane parallel to the glazing (4) and running in the separation of the seal (3) characterized in that the guide means (10) is in the form of a rigid, separate guide, being adhered to each of the parallel edges of the inward surface of the glazing (4), the guide means (10) extending only along the parallel edges of the glazing (4), and in that a vibration damper means (20) is disposed at a point along the top leg (2C) for receiving a small portion of the respective edge of the glazing (4).

2. The sealing structure of claim 1, wherein said vibration damper means (20) comprises outward- (20a) and inward- (20b) extending flaps joining to form a downward-facing crotch at a base fixed to the top leg (2c).

3. The sealing structure of claims 1—2, wherein said top leg (2c) is bent so as to form a corner, and said vibration damper means (20) is provided at the corner.

4. The sealing structure of claims 1—3, wherein said sealing (3) includes outward (3a) and inward (3b) lips elastically separable to allow said guide means (10) to pass therebetween in a position a distance inward from the outward surface of the legs (2a, 2b, 2c).

5. The sealing structure of claims 1—4, wherein said guide means (10) is fixed to said pane (4) by means of an adhesive (12), and a layer of decorative coloration (14) is provided between said pane (4) and said adhesive (12).

## Revendications

1. Structure de joint à utiliser pour un vitrage de glace verticalement mobile (4) dans un véhicule automobile où un encadrement de fenêtre (2) comprend deux branches parallèles, avant et arrière (2B, 2A) et une branche supérieure (2C), ledit vitrage (4) ayant deux bords parallèles correspondant sensiblement à la séparation des branches parallèles avant et arrière (2B, 2A) et un bord supérieur (4a), la structure de joint comprenant un joint (3) monté dans une structure en forme de U de l'encadrement de fenêtre (2) et présentant une séparation et un tampon (3c) s'étendant vers l'extérieur et amortissant le bord du vitrage (4) et un moyen de guidage (10) faisant partie des bords du vitrage (4), s'étendant dans un plan parallèle au vitrage (4) et passant dans la séparation du joint (3) caractérisée en ce que le moyen de guidage (10) a la forme d'un guidage rigide séparé qui adhère à chacun des bords parallèles de la surface du vitrage (4) située vers l'intérieur, le moyen de guidage (10) s'étendant uniquement le long des bords parallèles du vitrage (4) et en ce qu'un moyen d'amortissement des vibrations (20) est disposé en un point le long de la branche supérieure (2C) pour recevoir une petite partie de la branche respective du vitrage (4).

2. Structure de joint de la revendication 1 où ledit moyen d'amortissement des vibrations (20) comprend des volets s'étendant vers l'extérieur (20a) et vers l'intérieur (20b) se joignant pour former une fourche tournée vers le bas à une base fixée à la branche supérieure (2c).

3. Structure de joint selon les revendications 1—2, où ladite branche supérieure (2c) est courbée pour former un coin et ledit moyen d'amortissement des vibrations (20) est prévu au coin.

4. Structure de joint selon les revendications 1—3 où ledit joint (3) comprend des lèvres vers l'extérieur (3a) et vers l'intérieur (3b) élastiquement séparables pour permettre audit moyen de guidage (10) de passer entre elles en une position à une certaine distance vers l'intérieur de la surface des branches (2a, 2b, 2c) dirigée vers l'extérieur.

5. Structure de joint selon les revendications 1—4 où ledit moyen de guidage (10) est fixé à ladite vitre (4) au moyen d'un adhésif (12) et une couche d'une coloration décorative (14) est prévue entre ladite vitre (4) et ledit adhésif (12).

**Patentansprüche**

1. Dichtungsvorrichtung zur Verwendung für eine vertikal bewegbare Fensterscheibe (4) eines Kraftfahrzeuges, bei welchem ein Fensterrahmen (2) zwei parallele, nämlich einen vorderen und einen hinteren Schenkel (2B, 2A) und einen oberen Schenkel (2C) umfaßt, wobei die Fensterscheibe (4) zwei parallele Kanten, die im wesentlichen in den Zwischenraum der parallelen vorderen und hinteren Schenkel (2B, 2A) paßt, sowie eine obere Kante (4a) aufweist, wobei die Dichtungsvorrichtung eine Dichtung (3) umfaßt, die in einer U-förmigen Ausgestaltung des Fensterrahmens (2) gelagert ist und eine innere Trennfuge sowie einen Wulst (3c) aufweist, welcher sich nach außen erstreckt und die Kante der Fensterscheibe (4) abstützt, sowie eine Führungseinrichtung (10), welche ein Teil der Kanten der Fensterscheibe (4) darstellt und sich in einer Ebene erstreckt, die parallel zur Fensterscheibe (4) verläuft in der Trennfuge der Dichtung (3) läuft, dadurch gekennzeichnet, daß die Führungseinrichtung (10) in Gestalt einer festen, getrennten Führung ausgebildet ist, welche an jede der parallelen Kanten der inneren Fläche der Fensterscheibe (4) angeklebt ist, wobei die Führungseinrichtung (10) sich nur entlang der parallelen Kanten der Fensterscheibe (4) erstreckt, und daß eine Schwingungsdämpfungseinrichtung (20) an einer Stelle entlang des oberen Schenkels (2C) angeordnet ist, um mit einem kleinen Bereich der jeweiligen Kante der Fensterscheibe (4) in Eingriff bringbar zu sein.

2. Dichtungsvorrichtung nach Anspruch 1, wobei die Schwingungsdämpfungseinrichtung (20) sich nach außen (20a) und nach innen (20b) erstreckende Flügel umfaßt, welche ineinander übergehen, um eine nach unten weisende Gabelung an einem Basisteil, welches an dem oberen Schenkel (2c) befestigt ist, zu bilden.

3. Dichtungsvorrichtung nach einem der Ansprüche 1 oder 2, wobei der obere Schenkel (2C) abgebogen ist, so daß es eine Ecke bildet, und wobei die Schwingungsdämpfungseinrichtung (20) an der Ecke angeordnet ist.

4. Dichtungsvorrichtung nach einem der Ansprüche 1 bis 3, wobei die Dichtung (3) eine äußere (3a) und eine innere (3b) Lippe umfaßt, welche in elastischer Weise voneinander trennbar sind, um ein Vorbeilaufen der Führungseinrichtung (10) zwischen diesen in einer Position zu ermöglichen, welche um einen Betrag von der Außenfläche der Schenkel (2a, 2b, 2c) nach innen angeordnet ist.

5. Dichtungsvorrichtung nach einem der Ansprüche 1 bis 4, wobei die Führungseinrichtung (10) an der Fensterscheibe (4) mittels eines Klebstoffes (12) befestigt ist, und wobei eine Schicht dekorativer Farbe (14) zwischen der Fensterscheibe (4) und dem Klebstoff (12) vorgesehen ist.

# FIG.1

# FIG.2

# FIG.3

# FIG.4